# EUROPEAN PATENT APPLICATION

(11) **EP 4 844 241 A1**
(43) Date of publication of application: **25.11.2026**
(21) Application number: 24708515.2
(22) Date of filing: 16.01.2024
(51) Int. Cl.: F16G 3/00, B21L 7/00, F16G 3/12, F16G 13/12

(54) **SYNTHETIC CHAIN, FORMING MACHINE AND MANUFACTURING METHOD**

(71) Applicant: Vilanova Fabrega, David, 17854 Sant Jaume de Llierca (Girona) (ES); Murtra Lozoya, Eudaldo, 08400 Granollers (Barcelona) (ES)
(72) Inventor: Vilanova Fabrega, David, 17854 Sant Jaume de Llierca (Girona) (ES); Murtra Lozoya, Eudaldo, 08400 Granollers (Barcelona) (ES)
(74) Representative: Pons IP
(86) International application number: PCT/ES2024/070025
(87) International publication number: WO 2025/153746

(57) **Abstract**

The present invention relates to a synthetic chain comprising a plurality of links (1), each link (1) configured by a Moebius strip comprising a plurality of layers (2) formed by winding the strip on itself, wherein each link (1) comprises at least 13 layers (2), a length of at least 50 cm, a height of at least 75 mm, the layers (2) of each link (1) being attached by stitching (3) in groupings of up to 20 layers (2), and the stitches (3) being evenly distributed along each of the longitudinal sides of the link (1) in a number of between 1 and 30 stitches (3), so that the attachment of the layers (2) is prepared to withstand aggressive environments. The invention also relates to a machine that manufactures the chain and the method of manufacturing the chain.

## Description

### OBJECT OF THE INVENTION

The present invention relates to a synthetic chain, the links of which are configured by winding a Moebius strip, with the additional particularity that it is focused on high loads, which requires that, in addition to high dimensions of the links, it also incorporates a high number of synthetic layers for the generation of each link, so the layers are attached in groupings having a specific number of layers and each grouping is attached by stitching to prevent them from falling apart.

Furthermore, the invention also discloses a forming machine and the method for forming the chain.

It finds special application in the sector of chains used for lifting or securing large loads.

### BACKGROUND OF THE INVENTION

During the transport of goods, it is often necessary to lift very heavy loads. To do this, lifting cranes are typically used that incorporate a hook through which loads are hooked through chains that are normally made of metal.

This type of metal chain has a number of drawbacks, which make moving goods complicated and laborious. Specifically, the metal chains are very heavy, which adds additional weight to the load to be moved by the crane.

Furthermore, they are very susceptible to wear and tear, since besides the strong impacts they may undergo during use, they normally operate under weather conditions, being able to rust or being altered in some other way, for which reason when this happens it can have serious consequences.

An alternative to metal chains are synthetic chains made with Moebius-shaped links by winding several layers around themselves. These chains are made from very resistant materials, and that by comprising a set of fibres in one same strip, they can have much better features than those of metal chains, enabling the transport of heavier loads.

Furthermore, these fibre strips are much lighter, making them easy to use and move. Finally, by comprising a set of fibres in one same strip, in the event that the strip wears out, the fibres break one by one, in a very visible manner. In this case, the strip can be replaced and thereby prevent unforeseen accidents.

Moreover, the Moebius strip or loop must be highlighted, which is a surface with a single face and a single edge. It has the mathematical property of being a non-orientable object. It is also a ruled surface. This strip has been studied extensively over time since it has a series of very special features, and is applicable in many fields.

In order to form a Moebius strip, one must start with a strip of a certain material, one of the ends is turned halfway, i.e., a 180° rotation on itself, and finally both ends are attached.

The main benefit of the Moebius strip is that the entire fabric that makes up the thickness of the strip is subject to the same work requirements, while, in a normal strip, the fabric inside the strip is shorter than that on the outside, so it is subjected to greater stress during work.

A characteristic application of Moebius strips is to be manufactured as a chain in which each link is generated as a Moebius strip, wherein each link can be made up of a single layer or, more commonly, of several layers, increasing its technical specifications regarding load support.

The problems with metal chains are even more aggravated when the load to be treated is of considerable weight. In this case, the metal chains further increase the drawback relative to the weight that same contribute to the load to be treated, as they are links of larger dimensions and, therefore, of considerably greater weight. For their part, the synthetic Moebius chains existing in the state of the art have the drawback that they do not have the capacity to withstand such high loads, since the number of layers that the links have is limited.

Document EP3869063A1 discloses a device for forming links in the shape of a Moebius strip comprising a rotation module with an internal path in which a 180° rotation widening of a strip introduced into the rotation module is arranged. It also discloses a forming machine for forming synthetic chain in which each link is a Moebius strip, so it has excellent wear properties and supports very high loads. The invention further discloses a method for forming the synthetic chain that uses the forming device and comprises a step for pre-tightening, stitching and final stressing of the links.

The invention, in addition to presenting a chain with links made with Moebius strips, also discloses the method for manufacturing the links and a machine whereby this method is carried out.

### DESCRIPTION OF THE INVENTION

The present invention presents a solution to the problems identified in the background relative to the current state of the art.

To do this, a synthetic chain is generated made up of links configured using Moebius strips that have two main characteristics:
- being of large dimensions,
- being configured through a very high number of layers.

With this configuration, each of the links has the following characteristics:
- a minimum of 13 layers that can reach up to 100;
- a height of between 75 and 400 mm; and
- a length of between 50 and 300 cm.

This configuration allows obtaining a breaking capacity (MBL) of between 200 and 4,000 tons.

However, these characteristics of a synthetic chain are not sufficient to lift or secure heavy weight loads. The mere fact of incorporating larger links seems obvious when working with loads of larger dimensions than the usual ones. In fact, it seems logical that the size of the links increases linearly with the size of the load to be handled. Furthermore, this size increase requirement does not only affect longitudinal dimensions, but also the thickness of the links.

From this it follows that, transferred to a synthetic Moebius chain, the requirements for a high weight load will require strips of greater length and a greater number of layers, logically increasing the thickness.

The problem that these requirements entail for a chain due to having to support large loads is that the links in Moebius chains with a high number of layers do not have stability in terms of the relative position of the different layers, but rather, on the contrary, they separate and cause the chain not to work with the requirements for which it was configured but with other, much lesser requirements. This problem does not occur when the chain is already working, loaded and tightened, but during the logistics process, from the moment the chain is manufactured until it is positioned to perform a specific job.

In the current state of the art, a synthetic chain secures the layers of the links by stitching, both in the flat portion and in the Moebius area with a maximum limit of joint manufacture that covers between 14 and 20 layers, due to the technical limitations of existing stitching machines and their accessories. Therefore, using this method it is impossible to increase the number of layers of the winding.

This problem has been solved by using several methods, although only partially.

One solution consists of the use of adhesives that attach the different layers of the links. However, this solution has a problem, which is that these adhesives do not provide the reliability required in very high safety situations or in aggressive environments, such as submarines, with a high demand for prolonged fatigue in the long term, high temperatures or saline environment, for example.

Another solution consists of toroidal winding of each of the links using strips.

All this presents an enormous problem that is difficult to assume and that, in practice, is the reason why the use of high-performance synthetic chains is not implemented in practice.

The present invention discloses a synthetic chain in which these problems are solved.

Thus, to prevent slipping between the different layers of the links, stitching is carried out by groupings of layers, forming groupings and maintaining the perfect alignment thereof so that they work in unison.

In the chain manufacturing process, Moebius strips are first generated by accumulating them up to the marked objective to form the first link. Next, two options can occur.

One of them is that, once the first link has been manufactured, it is pre-tightened and stitched to subsequently build the next linked link on top of the first and proceed successively with the rest of the links.

The other option consists of manufacturing a first link, building the following links successively linked on top of the previous one and, once the chain is formed, proceeding to perform the stitching of the different links individually.

In either option, once a link is manufactured, it is subjected to pre-tightening and, subsequently, each link is stitched. The stitching process consists of the following steps:
- Release of the tension of the link to be stitched, so that a certain number of layers can be separated from the link that will form the grouping of layers to be stitched.
- Securing, using mechanical elements, of the transversal area to be stitched to avoid displacement of layers.
- Separation of the grouping of layers to be stitched to perform the stitching.
- Performing the stitching of a section in the link.
- Securing of the already stitched area to avoid displacement of layers.
- Performing the same operation for the different sections that are to be stitched along the entire length of the link.
- Repeating this process as many times as groupings of layers have been planned.
- Repeating the stitching process indicated above on the opposite side.
- Repeating the process in the rest of the links.

These stitches are preferably done automatically, although they can also be done manually. The number of stitched sections can be from 2 to 3, if they are longitudinal, and from 3 to 30 if they are transversal, depending on the length of the link.

Preferably, the link also incorporates a sheath, located at each of the ends of the link, which is preferably made of the same material as that of the link, with the aim of reinforcing the ends of the link against fatigue, since this area of the link is the one that supports the most friction and tension.

The sheath can be closed, for which it is assembled into a link before the manufacture thereof by inserting the different layers therethrough. However, it can also be open, so that it is assembled in the groupings of strips of each link once the chain is manufactured, closing mechanically using reversible fixing means or by stitching.

The chain can also incorporate a layer of resin, with the aim of improving both the rigidity and impermeability of the links.

In addition, the chain can also incorporate the application of a substance against microorganisms and thus prevent the adhesion of marine flora and fauna.

Finally, the links can also incorporate toroidal securing rings, both in the flat area and in the Moebius area in order to keep all the strip groupings together.

The invention also discloses a forming machine for forming synthetic chains as disclosed. The machine is made up of three well-differentiated stations or areas that operate sequentially:
- a forming station,
- a pre-tightening station, and
- a link stitching station.

The forming station is similar to that disclosed in document EP3869063A1 cited in the background. It comprises the following elements:
- a fixed structure that comprises a pair of shafts where two hollow rollers are inserted, capable of being extracted,
- a shuttle with a piston configured to be fixed at the end of a strip from which the chain is to be manufactured,
- a mechanism configured to grip the end of the strip and wind the same around the hollow rollers performing a 180 degree turn to generate the Moebius loop,
- a fixing device configured to fix the strip of the second turn to the section of the first turn,
- a supply device, configured to grip, move and release the strip, successively, and thus supply same in sections,
- a cutting device, configured to cut the strip once the link has been manufactured with the specific number of layers,
- a bracket configured to secure a finished link,

The pre-tightening station, for its part, comprises the following elements:
- a fixed structure comprising a pair of shafts where two hollow rollers are inserted, capable of being extracted,
- a first interlocking device and a second interlocking device, both movable,
- a movable bolt in each of the interlocking devices,
- a tightening device associated with and capable of moving one of the interlocking devices.

The stitching station, for its part, comprises the following elements:
- a fixed structure comprising a pair of shafts where two hollow rollers are inserted, capable of being extracted,
- a mobile base associated with the fixed structure, which incorporates the shafts,
- second shafts,
- a pressing device,
- a separating device, and
- a stitching machine.

The invention also discloses the manufacturing process of the disclosed links.

In general, the method comprises the following steps:
a) manufacturing a link,
b) pre-tightening the link,
c) selecting a grouping of layers of the link,
d) stitching the grouping of layers,
e) repeating steps c) and d) until all layers of the link are included in some grouping.

In more detail, this method can be carried out in two different ways.

The first embodiment focusses on the links of the chain individually, so that when a link is manufactured, it is moved to the following stations until the process is finished and then repeats the entire process with each of the remaining links.

The second embodiment consists of finishing the entire chain process at each of the stations.

Thus, according to the first embodiment, the method comprises the following steps:
a1) making a link at a forming station,
b1) transferring the link, if it is the first, or the generated chain, if another link has already been manufactured, to a pre-tightening station,
c1) placing a link on the shafts of the fixed structure of the pre-tightening station,
d1) moving the interlocking devices and fixing the bolts in the holes of the hollow rollers, aligned with the shafts,
e1) activating the tightening device to distance the interlocking devices and thus tighten the link,
f1) removing the interlocking devices,
g1) extracting the link (1) with the robotic arm,
h1) transferring the chain to the stitching station,
i1) placing the link (1) on the shafts of the stitching station,
j1) introducing the separator between two layers of the link to form a grouping of a specific number of layers,
k1) carrying out at least one section of stitching of the grouping formed in the area of the Moebius loop,
l1) removing the link from the shafts and placing same on second shafts,
m1) repeating steps o) and p) until all the layers of the link belong to a grouping,
n1) making at least one section of stitching (3) in the flat area of the link,
o1) repeating steps i1) to n1) until all layers (2) of the link belong to a grouping,
p1) placing the stitched link on the forming station support,
q1) if the chain has not been finished, returning to step a)
r1) ending the process.

According to the second embodiment, the method comprises the following steps:
a2) making a link at the forming station,
b2) placing the stitched link on the forming station support,
c2) making a series of links, each one connected to the previous one,
d2) transferring the generated chain to the pre-tightening station,
e2) placing a link on the shafts of the fixed structure of the pre-tightening station,
f2) moving the interlocking devices and fixing the bolts in the holes of the hollow rollers, aligned with the shafts,
g2) activating the tightening device to distance the interlocking devices and thus tighten the link,
h2) removing the interlocking devices,
i2) extracting the link with the robotic arm,
j2) repeating steps d)-h) with all the links,
k2) if all links have been pre-tightened, moving the chain to the stitching station,
l2) placing one of the links on the stitching station shafts,
m2) introducing the separator between two layers of the link to form a grouping of a specific number of layers,
n2) carrying out at least one section of stitching of the grouping formed in the area of the Moebius loop,
o2) removing the link from the shafts and placing same on second shafts,
p2) making at least one section of stitching in the flat area of the link,
q2) repeating steps l2) to p2) until all layers of the link belong to a grouping,
r2) placing the stitched link on the forming station support,
s2) ending the process.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a perspective view of a link of the chain of the present invention with the configuration of a Moebius strip, with a series of transversal stitches made along the link.
Figure 2 shows a perspective view of the link in Figure 1 with sheaths at the ends.
Figure 3 shows a perspective view of the chain with three links.
Figure 4 shows a perspective view of a chain of the invention with the links of figure 2.
Figure 5 shows a link made up of a pair of groupings of stitched layers.
Figure 6 shows a perspective view of the link forming station.
Figure 7 shows a perspective view of the forming process of the first layer of the link.
Figure 8 shows the forming station with the robotic arm.
Figure 9 shows a perspective view of the pre-tightening station of the invention.
Figure 10 shows a perspective view of the stitching station at the time of performing the stitching in the Moebius loop area.
Figure 11 shows the stitching station in figure 10 at the time of performing the stitching in the flat portion of the link.

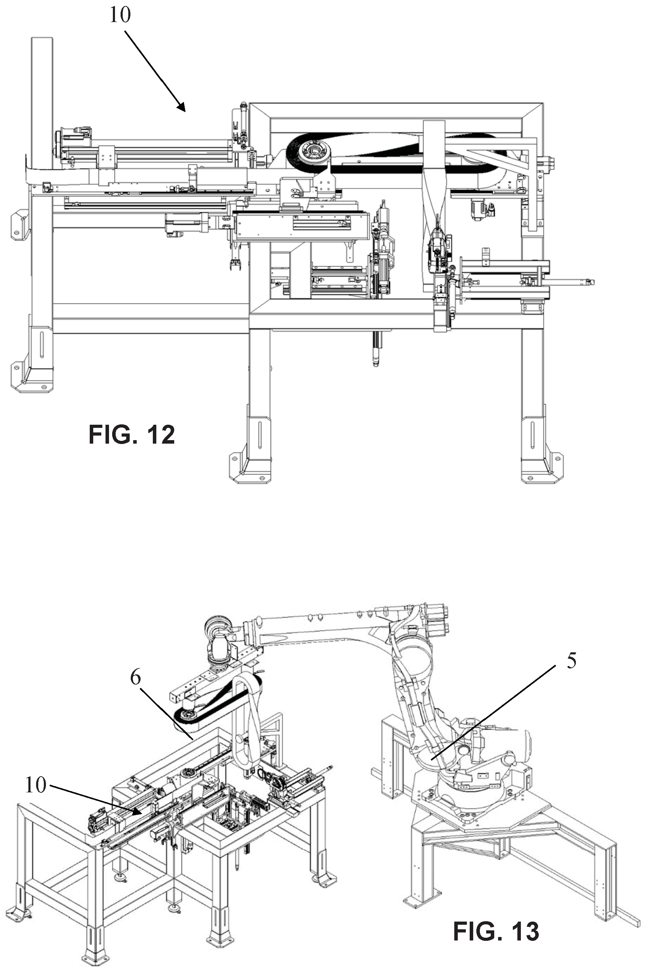

Figure 12 shows the perspective of the end of the forming process, in which the link is fully formed.
Figure 13 shows in perspective the process of transporting the link once formed through the use of the robot with the attached gripper, to the pre-tightening station.

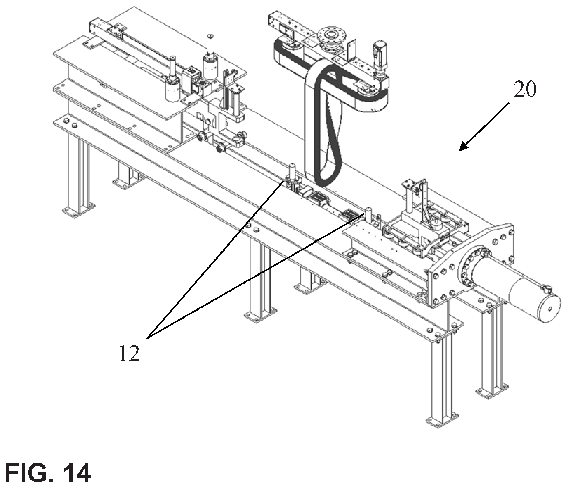

Figure 14 shows in perspective the orientation of the robot gripper along with the link at the arrival to the pre-tightening station, where it is located above the rollers.

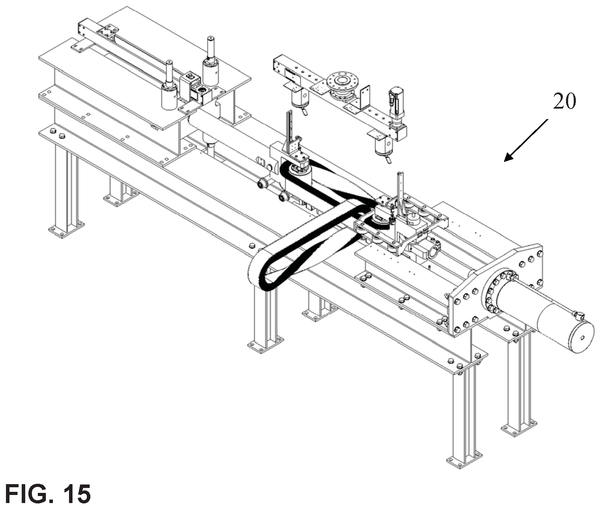

Figure 15 shows in perspective the pre-tightening process, in which the two pins have fixed the link and the hydraulic/electric means is applying the pre-tightening.

Below is a list of the different elements represented in the figures with the numerical references associated thereto:
1. Link.
2. Layers.
3. Stitching.
4. Sheaths.
5. Robotic arm.
6. Robotic arm gripper.
10. Forming station.
12. Shafts.
13. Hollow rollers.
14. Shuttle.
15. Piston.
16. Fixing device.
17. Supply device.
18. Cutter device.
19. Support.
20. Pre-tightening station.
21. First interlocking device.
22. Second interlocking device.
23. Bolt.
24. Tightening device.
30. Stitching station.
31. Mobile base.
32. Second shafts.
33. Pressing device.
34. Stitching machine.

### PREFERRED EMBODIMENT OF THE INVENTION

As indicated, the invention relates to a synthetic chain the links of which are configured by winding a Moebius-shaped strip wherein each link is generated from a high number of layers, so the layers are attached in groupings of a certain number and each grouping is attached together by stitching.

In addition, the invention also discloses the process to form the chain and a machine responsible for carrying out this process.

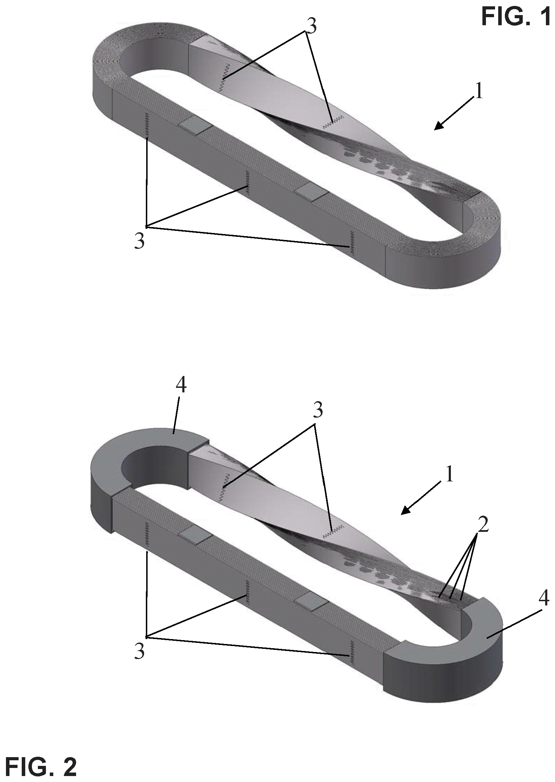

Figure 1 represents a link (1) of the synthetic chain of the invention. It can be seen that it is configured by winding a number of layers (2) of synthetic strip that also incorporates a rotation on its own axis to reach the Moebius configuration.

In this link (1) it can be observed that the layers (2) have a transversal stitching (3) which means that, with a non-tightened link, the layers (2) do not separate from each other causing the link to fall apart.

Figure 2 represents the link of Figure 1 that additionally incorporates a sheath (4) on each of the curved ends of the link (1). The reason for the sheath (4) is to create protection in the area of maximum tension in the chain, where the links (1) will suffer the most, so that premature wear of the layers (2) of the link (1) can be avoided.

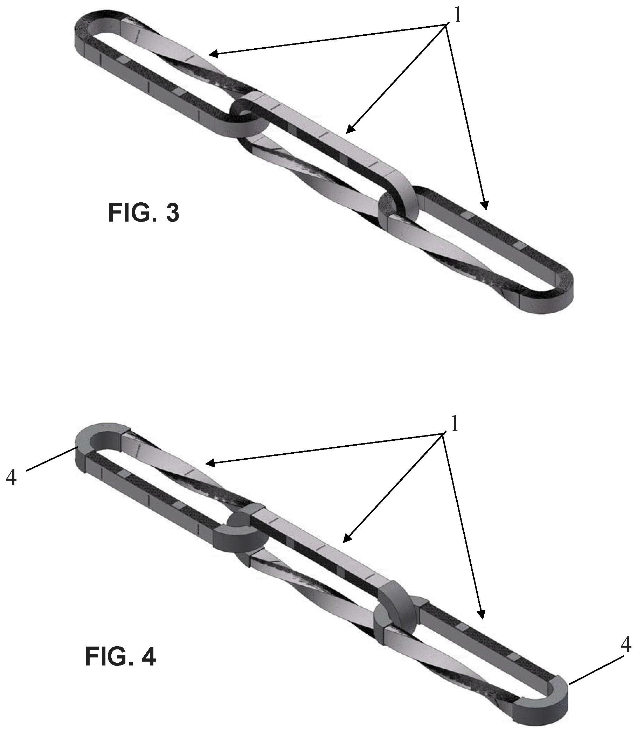

Figures 3 and 4 represent chains made with the links (1) of figures 1 and 2 respectively.

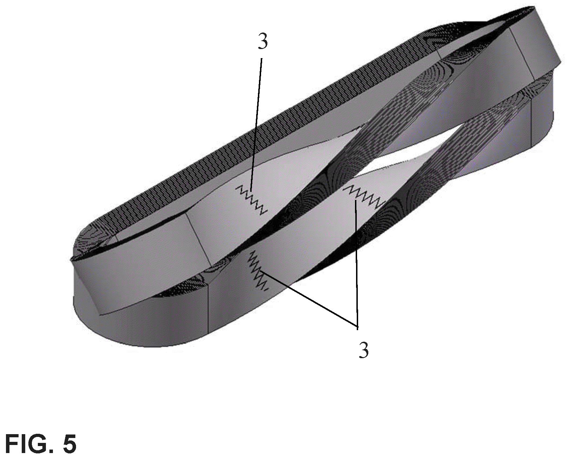

Figure 5 represents a link (1) made up of a high number of layers (2), wherein the layers (2) are attached by stitching (3) forming groupings having a specific number thereof.

As mentioned, the fact of being able to make links (1) by stitching a small number of layers (2) is something already known in the state of the art. However, manufacturing links (1) where the groupings of layers are greater than a figure between 13 and 20, depending on the thickness of the layers (2), is something that cannot be done directly, because the needles of stitching machines cannot pass through the thicknesses generated by this high number of strip layers (2).

Thus, the link (1) in Figure 5 is formed by a series of groupings of 20 layers (2), wherein each grouping has a series of stitches (3) intended to hold together the layers (2) of each grouping. This stitching (3) ensure that the links (1) do not fall apart and the link may be formed by several groupings that are not attached together.

In order for the links (1) to have this high number of layers (2), they must have large dimensions, considering that the minimum may be a width of 75 mm and a length of 50 cm.

### Description of the machine.

The invention also discloses a machine for manufacturing a chain with the links (1) that have been described.

The machine is made up of three well-differentiated stations or areas that operate sequentially:
- a forming station (10),
- a pre-tightening station (20), and
- a link stitching station (30).

The movement of the links (1) between the different stations (10, 20, 30) is produced by means of a robotic arm (5) programmed to grip the links using a gripper (6).

Below there will be a description of the elements of the machine and how the chain manufacturing process is carried out.

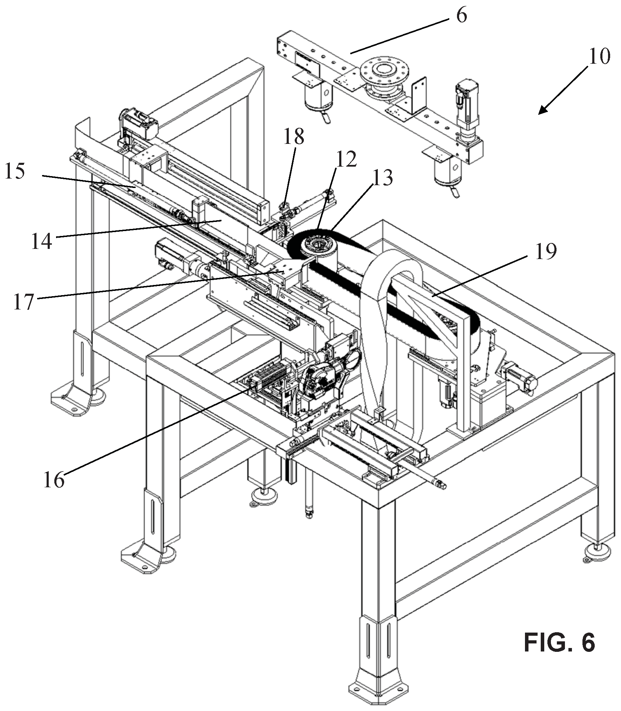

Figure 6 represents the forming station (10) of the machine.

In this forming station (10) there is a difference in terms of the method of forming the chain of the invention, when considering whether it is the manufacture of the first link (1) or if the first has already been manufactured and it is the manufacturing of a subsequent link, which would be coupled to the already manufactured first link. This second case is the one represented in Figure 6, wherein the first link (1), already manufactured, has been deposited in the support (19), as will be indicated later. The machine is not affected, but the manufacturing process is.

In the first case to consider, considering the manufacture of the first link (1), the manner in which the machine carries out the process is described below.

The forming station (10) is made up of a fixed structure (11) comprising a pair of shafts (12) where two hollow rollers (13) are inserted.

It also incorporates a shuttle (14) with a piston (15) where the end of a strip with which the links (1) of the chain will be manufactured is fixed. The strip is located in a storage area from where it will be supplied to the machine for manufacturing the chain.

This piston (15) moves to an area where the end of the strip is gripped by a mechanism that is responsible for moving it around the first hollow roller (13), making a turn around its longitudinal axis, to configure the Moebius rotation, and carry it around the second hollow roller (13), completing a layer (2) of the link (1).

At the end of the first layer (2), a fixing device (16) is responsible for fixing the strip that is beginning to form the second layer (2) to the final section of the first layer (2), so that the link (1) is closed. This fixation step is only applied at the end of the first layer (2). The fixing device (16) can perform fixation by applying ultrasound, adhesive or any known element.

A supply device (17) is responsible for providing strip to the forming station (10), so that the piston (15) can be moved without having to pull all the stored strip. To do this, the fixing device (16) is responsible for gripping, moving and releasing the strip, successively, to supply it in sections.

The process is repeated until the link (1) is formed with the predetermined number of layers (2) that is to form the same.

A cutting device (18) proceeds to cut the strip and subsequently the free end is fixed to the last layer (2) of the link (1) that has been formed. The mechanism that held the strip and was responsible for generating the layers (2) releases the strip and returns to its initial position so that the piston (15) grips the end of the strip and thus makes a new link (1) again or terminates the process.

In the second case to consider, where the first link (1) has already been manufactured, two options can be given.

A first option consists of removing the link (1) already manufactured from the forming station (10) and taking it to the following stations (20, 30), first to the pre-tightening station (20), and subsequently to the stitching station (30). Then, the link (1) is returned to the forming station (10) to be placed in the support (19) and proceed to generate the next link (1).

A second option is to generate the complete chain in the forming station (10) to subsequently go to the other stations (20, 30) with the chain already formed.

### In either case, the link (1) formed is transferred by the robotic arm (5).

Before starting the manufacture of the next link (1), the newly manufactured link (1), regardless of whether it has remained in the forming station (10) or has gone to the other stations (20, 30), is placed by the robotic arm (5) on a support (19), the rest of the links (1) that make up the chain, if they had already been manufactured, being left hanging. Then, the robotic arm (5) will return the hollow rollers (13) to the shafts (12) to begin the manufacturing cycle of a new link (1).

Once a link (1) has been manufactured, whether the first or a subsequent one, the following describes how the following links are manufactured.

The shuttle (14) performs the same process again. The piston (80) and the shuttle act again and the strip passes through the link (1) located in the support (19) where the mechanism once again begins the formation of the link (1) as described above.

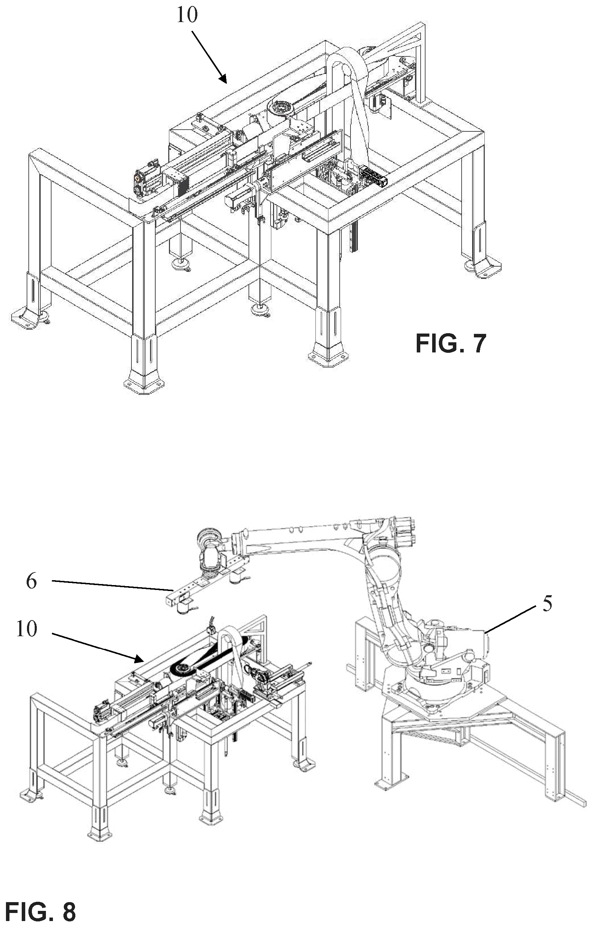

Figure 7 represents the formation of the first layer (2) of the link (1) from a different point of view than that of Figure 6.

Figure 8 represents the forming station (10) together with a robotic arm (5) that incorporates a gripper (6) for manipulating the links (1) through the hollow rollers (13). Thus, in order not to lose the tension of the link (1), the gripper (6) captures the hollow rollers (13), with the link (1) wound therein, and extracts them from the shafts (12) to place them on the shafts (12) of the pre-tightening station (20) or in the support (19). In the latter case, the robotic arm (5) will loosen the link (1) to extract the hollow rollers (13) and return them to the shafts (12) of the forming station (10), as mentioned.

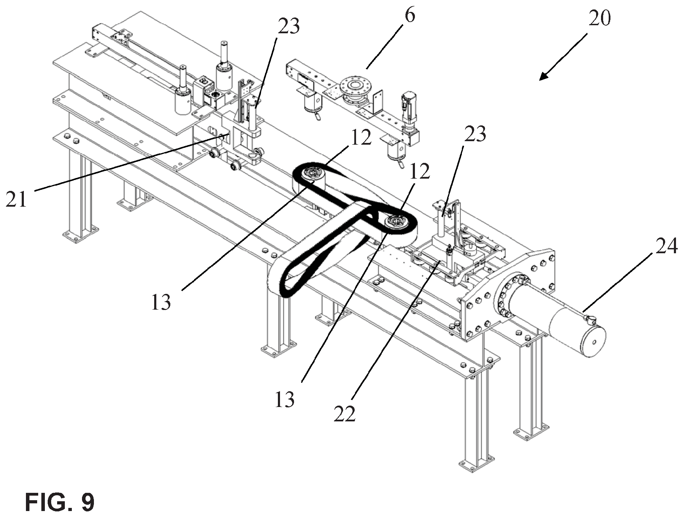

Figure 9 represents the pre-tightening station (20), where the pre-tightening of the link (1) that has been generated in the forming station (10) is carried out.

Pre-tightening is understood as the axial load that is applied to a link (1) to ensure the position of the layers (2) and their geometry. The pre-tightening load is a percentage of the chain's maximum working load.

The robotic arm (5) arrives at the pre-tightening station (20) with a link (1) in the gripper (6) and, optionally, the rest of the formed chain. It positions it, housing the hollow rollers (13) on shafts (12), identical to those of the forming station (1), which are located in a fixed structure to begin the pre-tightening process.

The pre-tightening station (20) comprises a first interlocking device (21) and a second interlocking device (22), both with a bolt (23).

The two interlocking devices (22, 23) are capable of moving to position the bolts (23) in the hole of the hollow rollers (13) where the shafts (12) are inserted, leaving the bolts (23) aligned with the shafts (12).

Thus, having the hollow rollers (13) fixed, and therefore the link (1) to which they are fixed, the second interlocking device (22) is subjected to a displacement by means of a tightening device (25) to distance the same from the first interlocking device (21) and thus tighten the link.

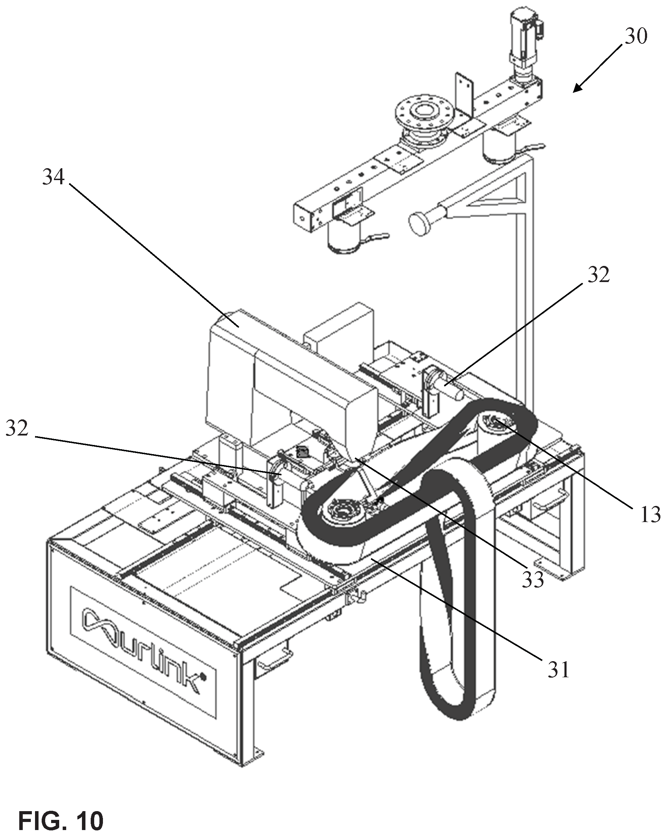

Figure 10 represents the stitching station (30), which is formed by a fixed structure where a mobile base (31) is positioned which incorporates another pair of shafts (12), identical to the previous ones, and second shafts (32), perpendicularly positioned to the shafts (12) of all the stations (10, 20, 30). The stitching station (30) also incorporates a pressing device (33), a separating device and a stitching machine (34).

Thus, the robotic arm (5) will carry the chain from the pre-tightening station (20) to fit the hollow rollers (13) on the shafts (12), as well as in the pre-tightening station (20), so that the stitching machine (34) can perform a series of stitches (3) in the Moebius loop area.

It should be noted that the stitching machine (34) has the needles in a vertical position and, in this position, the layers of the link (1) to be stitched are vertical, which could not be stitched, with the exception of the Moebius loop area, which is horizontal and is the only area that could be stitched.

Since the stitching machine (34) cannot stitch the entire thickness of the link (1), the machine has a separator that is inserted between two layers (2) of the link (1) to form a grouping of layers (2) of a predetermined number. To insert the separator, the link is loosened to form a space so that the stitching machine (34) can operate.

Then, the robotic arm (5) is removed and the mobile base (31) is moved to position the link (1) in the appropriate area to perform the stitching (3) of the different sections.

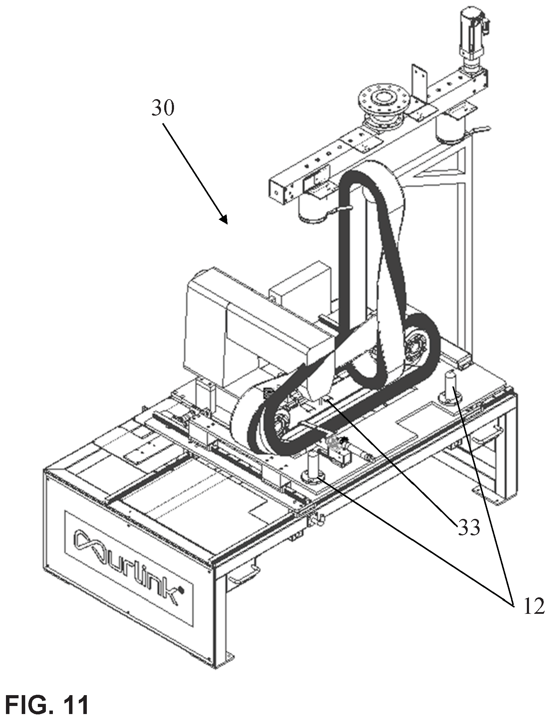

Once the stitching (3) of the different sections of the Moebius loop area has been completed, the mobile base (31) is removed to allow the robotic arm (5) to grip the hollow rollers (13) together with the link ( 1), to position them on the second shafts (32) and thus be able to carry out the stitching (3) on the rest of the length of the link (1), as represented in figure 11.

Upon completion of the stitching of a grouping, the separator selects a new grouping and the process of stitching this grouping is repeated in the area of the Moebius loop and in the flat area of the link (1) until all the layers (2) form part of a grouping.

To perform the stitching (3) of the different sections in the link (1), the mobile base (31) is moved to be positioned appropriately with respect to the stitching machine (34).

In order to make the chain of the invention, the method followed by the manufacturing machine can be carried out in two different ways.

In a first embodiment, the method comprises the following steps:
a1) making a link (1) in the forming station (10),
b1) transferring the link (1), if it is the first, or the generated chain, if another link (1) has already been manufactured, to the pre-tightening station (20),
c1) placing a link (1) on the shafts (12) of the fixed structure of the pre-tightening station (20),
d1) moving the interlocking devices (22, 23) and fixing the bolts (23) in the holes of the hollow rollers (13), aligned with the shafts (12),
e1) activating the tightening device (25) to distance the interlocking devices (22, 23) and thus tightening the link (1),
f1) removing the interlocking devices (22, 23),
g1) extracting the link (1) with the robotic arm (5),
h1) transferring the chain to the stitching station (30),
i1) placing the link (1) on the shafts (12) of the stitching station (30),
j1) introducing the separator between two layers (2) of the link (1) to form a grouping having a specific number of layers (2),
k1) carrying out at least one section of stitching (3) of the grouping formed in the area of the Moebius loop,
l1) removing the link from the shafts (12) and placing same on second shafts (32),
m1) repeating steps o) and p) until all layers (2) of the link (1) belong to a grouping,
n1) performing at least one section of stitching (3) in the flat area of the link (1),
o1) repeating steps k1) to q1) until all layers (2) of the link (1) belong to a grouping,
p1) placing the stitched link (1) on the support (19) of the forming station (10),
q1) if the chain has not been finished, returning to step a)
r1) ending the process.

In a second embodiment, the method comprises the following steps:
a2) making a link (1) in the forming station (10),
b2) placing the stitched link (1) on the support (19) of the forming station (10),
c2) making a series of links (1), each one connected to the previous one,
d2) transferring the generated chain to the pre-tightening station (20),
e2) placing a link (1) on the shafts (12) of the fixed structure of the pre-tightening station (20),
f2) moving the interlocking devices (22, 23) and fixing the bolts (23) in the holes of the hollow rollers (13), aligned with the shafts (12),
g2) activating the tightening device (25) to distance the interlocking devices (22, 23) and thus tightening the link (1),
h2) removing the interlocking devices (22, 23),
i2) extracting the link (1) with the robotic arm (5),
j2) repeating steps d)-h) with all the links (1),
k2) if all the links (1) have been pre-tightened, moving the chain to the stitching station (30),
l2) placing one of the links (1) on the shafts (12) of the stitching station (30),
m2) introducing the separator between two layers (2) of the link (1) to form a grouping having a specific number of layers (2),
n2) carrying out at least one section of stitching (3) of the grouping formed in the area of the Moebius loop,
o2) removing the link from the shafts (12) and placing same on second shafts (32),
p2) performing at least one section of stitching (3) in the flat area of the link (1),
q2) repeating steps l2) to p2) until all layers (2) of the link (1) belong to a grouping,
r2) placing the stitched link (1) on the support (19) of the forming station (10),
s2) ending the process.

## Claims

1. A synthetic chain comprising a plurality of links (1), each link (1) configured by a strip comprising a plurality of layers (2) formed by winding the strip on itself, wherein the strip is a Moebius strip, **characterised in that** each link (1) comprises:
- at least 13 layers (2),
- a length of at least 50 cm,
- a height of at least 75 mm,
wherein:
- the layers (2) of each link (1) are attached by stitching (3) in groupings of up to 20 layers (2), and
- the stitches (3) are evenly distributed along each of the longitudinal sides of the link (1) in a number of between 1 and 30 stitches (3),
so that the attachment of the layers (2) is prepared to withstand aggressive environments.

2. The synthetic chain of claim 1, wherein each link (1) comprises a sheath (4) at each of the ends.

3. The synthetic chain of claim 2, wherein the sheath (4) is made of the same material as the link (1) in which it is located.

4. The synthetic chain of claim 1, wherein each link (1) comprises at least one toroidal securing ring located on at least one of the longitudinal sides.

5. A forming machine for forming links (1) of the synthetic chain of claim 1, **characterised in that** it comprises:
- a forming station (10),
- a pre-tightening station (20), and
- a link (1) stitching station (30).
wherein:
- the forming station (10) comprises:
- a fixed structure comprising a pair of shafts (12) where two hollow rollers (13) are inserted, capable of being extracted,
- a shuttle (14) with a piston (15) configured to be fixed at the end of a strip with which the link (1) is to be manufactured,
- a mechanism configured to grip the end of the strip and wrap it around the hollow rollers (13) performing a 180 degree turn to generate the Moebius loop,
- a fixing device (16) configured to fix the strip of the second turn to the section of the first turn,
- a supply device (17), configured to grip, move and release the strip, successively, and thus supply same in sections,
- a cutting device (18), configured to cut the strip once the link has been made with the specific number of layers (2),
- a support (19) configured to secure an already finished link (1),
- the pre-tightening station (20) comprises:
- a fixed structure comprising a pair of shafts (12) where two hollow rollers (13) are inserted, capable of being extracted,
- a first interlocking device (21) and a second interlocking device (22), both movable,
- a bolt (23) movable in each of the interlocking devices (21, 22),
- a tightening device (24) associated with and capable of moving one of the interlocking devices (21, 22),
- the stitching station (30) comprises:
- a fixed structure comprising a pair of shafts (12) where two hollow rollers (13) are inserted, capable of being extracted,
- a mobile base (31) associated with the fixed structure, which incorporates the shafts (12),
- second shafts (32),
- a pressing device (33),
- a separating device, and
- a stitching machine (34).

6. A method for manufacturing a synthetic chain with the link of claim 1, **characterised in that** it comprises the following steps:
a) manufacturing a link (1),
b) pre-tightening the link (1),
c) selecting a grouping of layers (2) of the link (1),
d) stitching the grouping of layers (2),
e) repeating steps c) and d) until all layers (2) of the link (1) are included in a grouping.

7. The manufacturing method of a synthetic chain according to claim 6, **characterised in that** it comprises the following phases:
a1) making a link (1) in a forming station (10),
b1) transferring the link (1), if it is the first, or the generated chain, if another link (1) has already been manufactured, to a pre-tightening station (20),
c1) placing a link (1) on the shafts (12) of the fixed structure of the pre-tightening station (20),
d1) moving the interlocking devices (22, 23) and fixing the bolts (23) in the holes of the hollow rollers (13), aligned with the shafts (12),
e1) activating the tightening device (25) to distance the interlocking devices (22, 23) and thus tightening the link (1),
f1) removing the interlocking devices (22, 23),
g1) extracting the link (1) with the robotic arm (5),
h1) transferring the chain to the stitching station (30),
i1) placing the link (1) on the shafts (12) of the stitching station (30),
j1) introducing the separator between two layers (2) of the link (1) to form a grouping having a specific number of layers (2),
k1) carrying out at least one section of stitching (3) of the grouping formed in the area of the Moebius loop,
l1) removing the link from the shafts (12) and placing same on second shafts (32),
n1) performing at least one section of stitching (3) in the flat area of the link (1),
o1) repeating steps i1) to n1) until all layers (2) of the link (1) belong to a grouping,
p1) placing the stitched link (1) on the support (19) of the forming station (10),
q1) if the chain has not been finished, returning to step a)
r1) ending the process.

8. The manufacturing method of a synthetic chain according to claim 6, **characterised in that** it comprises the following phases:
a2) making a link (1) in the forming station (10),
b2) placing the stitched link (1) on the support (19) of the forming station (10),
c2) making a series of links (1), each one connected to the previous one,
d2) transferring the generated chain to the pre-tightening station (20),
e2) placing a link (1) on the shafts (12) of the fixed structure of the pre-tightening station (20),
f2) moving the interlocking devices (22, 23) and fixing the bolts (23) in the holes of the hollow rollers (13), aligned with the shafts (12),
g2) activating the tightening device (25) to distance the interlocking devices (22, 23) and thus tightening the link (1),
h2) removing the interlocking devices (22, 23),
i2) extracting the link (1) with the robotic arm (5),
j2) repeating steps d)-h) with all the links (1),
k2) if all the links (1) have been pre-tightened, moving the chain to the stitching station (30),
l2) placing one of the links (1) on the shafts (12) of the stitching station (30),
m2) introducing the separator between two layers (2) of the link (1) to form a grouping having a specific number of layers (2),
n2) carrying out at least one section of stitching (3) of the grouping formed in the area of the Moebius loop,
o2) removing the link from the shafts (12) and placing same on second shafts (32),
p2) performing at least one section of stitching (3) in the flat area of the link (1),
q2) repeating steps l2) to p2) until all layers (2) of the link (1) belong to a grouping,
r2) placing the stitched link (1) on the support (19) of the forming station (10),
s2) ending the process.
